# EUROPEAN PATENT APPLICATION

(11) **EP 1 174 065 A1**
(43) Date of publication of application: **23.01.2002**
(21) Application number: 00500264.7
(22) Date of filing: 21.12.2000
(51) Int. Cl.: A47J 42/00, A47J 42/40

(54) **Appliance to grind and dispense coffee**

(30) Priority: 21.07.2000 ES 200001958 U
(71) Applicant: Diaz Blanco, German, 45910 Escalona, Toledo (ES)
(72) Inventor: Diaz Blanco, German, 45910 Escalona, Toledo (ES)
(74) Representative: Maldonado Jordan, Julia

(57) **Abstract**

Device to grind and dispense coffee, comprising a general casing housing (1) a coffee bean supply hopper (4). Coffee is supplied by the hopper (4) following the corresponding request by the bowl or holder (10) which receives the measure of coffee. The appliance is characterised by being provided with two independently operating grinders (6), under each of which is the corresponding dispenser (7), also independent, whose outlets face respective supports or parts (9) on which to place a bowl or holder (10) to receive the corresponding measure of coffee. On the front of the appliance under each of the dispensers (7) is a button (11) which activates its respective grinder (6) when depressed by the holder (10), causing the grinder (6) to grind a measure of coffee which then falls through the dispenser (7) to the corresponding holder (10).

## Description

### PURPOSE OF THE INVENTION

The invention is a device or appliance whose purpose is to grind coffee and immediately dispense the ground coffee into the corresponding bowl or holder. Placing the bowl or holder to receive the measure of coffee activates the grinding mechanism and makes coffee fall down into a dispenser which is above and facing the zone used to place the holder that receives the ground coffee.

The purpose of the invention is to provide an appliance with the functions described above which incorporates two grinders and their corresponding timers, the grinders operating independently of each other. Under the grinders are the respective dispensers, making it possible for the appliance to supply ground coffee through either of the dispensers subject to the holder being placed in the corresponding opening.

### BACKGROUND OF THE INVENTION

There are numerous types of machine or appliance to grind coffee and dispense a measure of it under gravity to a holder used subsequently to make a drink of coffee.

In this respect, reference may be made to the dispensing device to grind coffee described in utility model 9601545. In this model there are two pipes each with a dispenser, the bottom end of which discharges independently; a measure of coffee may be supplied through either one. The top ends of these pipes meet at a common neck coupled to a coffee grinding mill. A suitable mechanism which depends on the bowl or holder being placed under one or the other of these dispenser pipes activates the gate provided underneath, which normally serves to close off the corresponding pipe, and allows the ground coffee to fall from the pipe into the holder. This operation involves tilting a gate situated at the upper confluence between the two pipes to leave open the pipe for which coffee is required and to close the other one. All this takes place in such a way that once the holder with the corresponding measure of coffee is removed, the grinder is actuated and a suitable measure of coffee falls into the pipe which has been emptied, such that if a further measure is required from that pipe the device does not operate and the measure has to be requested from the other pipe. At this particular moment, the top tilting gate swings over to close the pipe mentioned first above and open the pipe from which coffee has just been requested, making it possible to receive the measure of coffee through this second pipe, suitably dispensed.

This device was conceived to allow the user, in accordance with a suitable timer system, to grind either a single or double measure of coffee and thereby be able to comply with the request for coffee in either a single or double measure. However, if the grinder breaks down the device does not supply coffee, the same thing occurring if there is a fault in any component of the device as a whole, since dispensing through either of the pipes is dependent upon common working for the two cases.

### DESCRIPTION OF THE INVENTION

The appliance proposed is based on the principle of having two coffee dispensers, but with a special feature giving rise to substantial advantages which will be set down over the course of this description, this being that the appliance has two grinders and two dispensers which work independently of each other. This means that even though one of them may be out of use, the other can supply coffee as many times as requested, since each is independently actuated and works totally separately from the other.

More specifically, the invented appliance consists of a general casing at the top of which is a storage hopper for the coffee beans which communicates with two independent grinders. There is an independent dispenser underneath each grinder, these being over the zone or part where the bowl or holder used to receive the coffee is placed. In this situation or zone is a button which is pressed down when the bowl or holder is placed in position, activating the corresponding grinder which grinds a measure of coffee in accordance with preset programming. The coffee drops down to the respective dispenser and from this to the holder situated underneath it. Coffee may be requested constantly from this dispenser leaving the other completely at rest, since both are actuated completely independently and have no type of working relationship.

The appliance is fitted with a viewer which allows the user to see how much coffee remains in the storage hopper, and there are in addition means to regulate how finely the coffee is ground.

The appliance may also be equipped with an electronic purse to provide coin operation.

This appliance is intended for use in the hotel and catering industry, although private use should not be ruled out.

### DESCRIPTION OF DRAWINGS

This descriptive report is accompanied by a set of drawings which form part of it and are provided to complement the description as well as aid understanding of the characteristics of the invention. The drawings are of an illustrative and not limiting nature, and show the following:

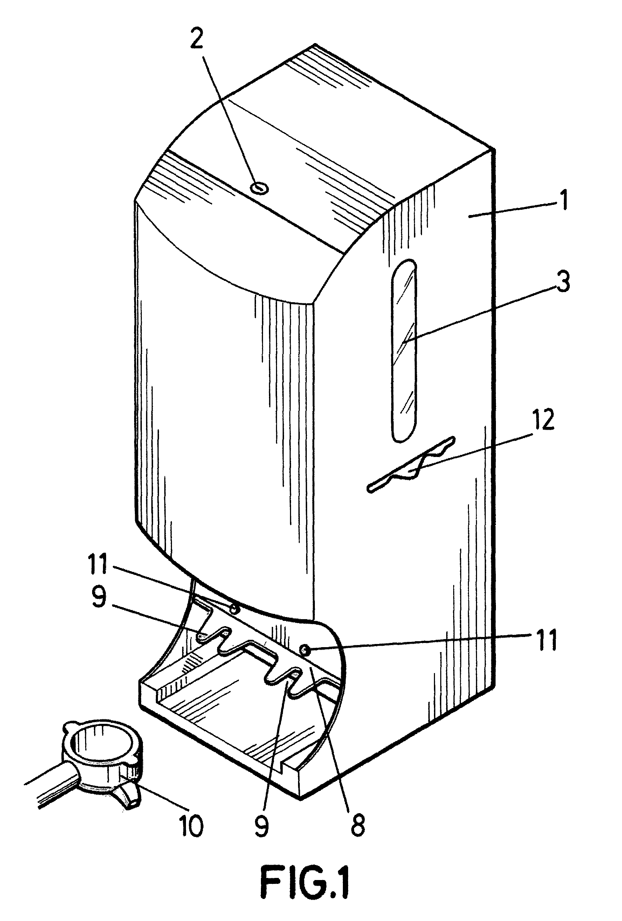

Figure 1.- This represents a general view of the appliance to grind and dispense coffee realised in accordance with the purpose of the invention.

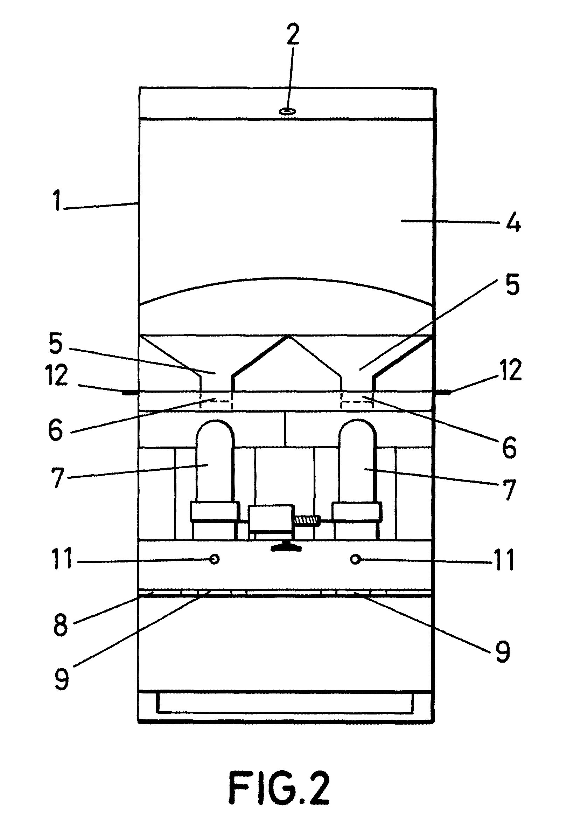

Figure 2.- This represents a front view of the same appliance as shown in the previous figure, but without its front wall to provide a view of the location of the two grinders, dispensers and the coffee bean storage hopper.

### PREFERRED EMBODIMENT OF THE INVENTION

As the figures referred to above show, the appliance to grind and dispense coffee realised in accordance with the purpose of the invention includes a general casing (1) with a top cover equipped with a suitable means of closure (2), while at the side is a viewer (3) through which one can see the level of coffee beans stored in the hopper (4) determined at top and bottom by the body or casing (1) of the appliance.

Under the hopper are two pipes (5) which communicate with the hopper (4) itself and which discharge into the respective grinders (6). Beneath the grinders (6) are the corresponding dispensers (7), and below them a plate (8) with parts (9) to position and fit the respective holder (10) or bowl which receives the measure of coffee. Below the dispensers (7) and above the parts (9) to which the bowl or holder (10) is fitted are the buttons (11).

On the sides, provision has been made for means of regulation (12) to adjust grinding fineness, that is to say, manual adjustment of these regulators (12) makes the grinders (6) grind the coffee to a finer or coarser grain.

In accordance with these characteristics, the appliance functions as follows:

When a holder (10) is placed on one of the parts or supports (9) established in the plate (8) facing the dispensers (7) and buttons (11), the respective button (11) of the corresponding grinder (6) is depressed and the grinder grinds a measure of coffee which falls down through the dispenser (7) towards the holder (10) situated immediately below it. The two grinders (6) and of course the two dispensers (7) work independently, since each button (11) acts solely and exclusively on its own grinder (6), which is the one corresponding to the position the holder (10) has previously been placed in.

The appliance has two internal timers to regulate the operating time of the grinders (6), time regulation for each timer logically being independent so that one may be set for a longer period and grind more coffee, and vice versa.

In any case, the purpose of these timers is to provide a larger or smaller measure of coffee depending on the grinding time for each particular grinder (6).

In accordance with what has been set out above, the appliance is able to work and keep service going even when one of the grinders does not work, of if for whatever reason one of the dispensers has become obstructed or a button is out of operation, since the other assembly is totally independent. As a result, service may as mentioned above be continued while the other assembly is being repaired.

It has also been mentioned earlier that the appliance may be equipped with an electronic purse which, when money is inserted and depending on the value of the coin or coins, will signal a certain number of measures on a display. Each time a measure is dispensed, the number of measures will, logically enough, diminish until none remain. In this case of a coin-operated appliance, then when there are no more measures on the display the grinders will not operate even if a measure is requested by placing a holder (10) in position. The appliance will not supply coffee until a minimum of the value of one measure of coffee in the coins accepted by the purse is inserted into it.

A more extensive description is not needed for any expert on the subject to understand the scope of the invention and the advantages it offers.

The materials, shape, size and layout of elements are liable to change provided there is no alteration to the essence of the invention.

The terms in which this report has been written should not be considered as limiting and must always be taken in their widest sense.

## Claims

1. Device to grind and dispense coffee, comprising a general casing housing a coffee bean supply hopper. Coffee is supplied by the hopper following the corresponding request by the bowl or holder which receives the measure of coffee. The appliance is **characterised by** being provided with two independently operating grinders, under each of which is the corresponding dispenser, also independent, whose outlets face respective supports or parts on which to place a bowl or holder to receive the corresponding measure of coffee. On the front of the appliance under each of the dispensers is a button which activates its respective grinder when depressed by the holder, causing the grinder to grind a measure of coffee which then falls through the dispenser to the corresponding holder.

2. Device to grind and dispense coffee as per the 1^{st} claim, **characterised** because each grinder is associated with an internal timer which may be programmed to regulate an independent operating time for each grinder and thereby supply a greater or lesser quantity of coffee.

3. Device to grind and dispense coffee as per previous claims, **characterised** because on the side it is fitted with a viewer which enables the quantity of coffee beans stored in the hopper to be seen. Moreover, on each side there are manually-operated regulators to regulate the fineness or coarseness of the ground coffee grains.

4. Device to grind and dispense coffee as per previous claims, **characterised** because it is capable of being equipped with an electronic purse to be positioned in an appropriate place and intended to receive money, the amount of which is converted into credits or number of measures that the appliance may supply, such credits or numbers of measures being shown on a signal display.
